# EUROPÄISCHE PATENTSCHRIFT

(11) **EP 3 442 312 B1**
(45) Veröffentlichungstag und Bekanntmachung des Hinweises auf die Patenterteilung: **25.03.2020**
(21) Anmeldenummer: 18188000.6
(22) Anmeldetag: 08.08.2018
(51) Int. Cl.: B60Q 3/80, H05B 37/02

(54) **VERFAHREN ZUM AUSLEUCHTEN EINES INNENRAUMS EINES KRAFTFAHRZEUGS; SOWIE KRAFTFAHRZEUG**
METHOD FOR ILLUMINATING AN INTERIOR OF A MOTOR VEHICLE, AND MOTOR VEHICLE
PROCÉDÉ D'ÉCLAIRAGE D'UN ESPACE INTÉRIEUR D'UN VÉHICULE AUTOMOBILE AINSI QUE VEHICULE AUTOMOBILE

(30) Priorität: 10.08.2017 DE 102017213989
(43) Veröffentlichungstag der Anmeldung: 13.02.2019
(73) Patentinhaber: AUDI AG, 85045 Ingolstadt (DE)
(72) Erfinder: Kastner, Julia, 92339 Beilngries (DE); Tontsch, Friedrich-Uwe, 85051 Ingolstadt (DE); Berlitz, Stephan, 86529 Schrobenhausen (DE); Heider, Christian, 93047 Regensburg (DE); Brunsch, Thilo, 85051 Ingolstadt (DE); Ettenhuber, Benjamin, 90537 Feucht (DE)

(56) Entgegenhaltungen:
- DE-A1-102008 033 542
- DE-A1-102012 211 052

## Beschreibung

### BESCHREIBUNG:

Die Erfindung betrifft ein Verfahren zum Ausleuchten eines Innenraums eines Kraftfahrzeugs. Außerdem betrifft die Erfindung ein Kraftfahrzeug zur Durchführung eines solchen Verfahrens.

Das Kraftfahrzeug kann unterschiedliche Beleuchtungseinrichtungen umfassen, welche jeweilige Leuchtmittel aufweisen. Die Leuchtmittel der vorliegenden Erfindung sind insbesondere zur Ausleuchtung des Innenraums des Kraftfahrzeugs angeordnet. Mit anderen Worten handelt es sich vorliegend um eine Beleuchtungseinrichtung, die in einem Innenraum des Kraftfahrzeugs angeordnet ist und diesen ausleuchtet. Zur Ausleuchtung des Innenraums des Kraftfahrzeugs sind beispielsweise weiße Innenraumleuchten, welche mehrere Sitzplätze des Kraftfahrzeugs ausleuchten, sowie Leseleuchten, welche nur einen Sitzplatz des Kraftfahrzeugs ausleuchten, bekannt.

Weiße Leuchten, welche in einem Sichtfeld eines Fahrers des Kraftfahrzeugs angeordnet sind, sind mit Nachteilen behaftet, da sie den Fahrer bei Dunkelheit blenden können. Aus diesem Grund ist eine Ausleuchtung des Innenraums mittels herkömmlicher Leuchten bei Dunkelheit nicht vorteilhaft.

Die DE 10 2010 003 270 A1 hat eine Kraftfahrzeuginnenbeleuchtung mit einem Lichtleiter zum Gegenstand, mit einer ersten Lichtquelle, die derart ausgeführt und angeordnet ist, dass Licht der ersten Lichtquelle an einem ersten Ende des Lichtleiters in den Lichtleiter eingekoppelt wird, mit einer zweiten Lichtquelle, die derart ausgeführt und angeordnet ist, dass Licht der zweiten Lichtquelle an einem zweiten Ende des Lichtleiters, das insbesondere dem ersten Ende des Lichtleiters gegenüberliegt, in den Lichtleiter eingekoppelt wird, und mit einer Steuereinrichtung zum Steuern der Lichtquellen derart, dass das Licht der Lichtquellen hinsichtlich Farbe und/oder Helligkeit geändert wird.

Der DE 10 2005 036 941 A1 ist eine Einrichtung zur Steuerung einer Kfz-Innenraumbeleuchtung zu entnehmen. Die Einrichtung umfasst Leuchtmittel zum Erzeugen verschiedener Lichtfarben und Lichtintensitäten, wobei gemäß der aktuellen Befindlichkeit des Fahrers aus einer Mehrzahl von Beleuchtungsprogrammen automatisch ein bestimmtes Beleuchtungsprogramm aktiviert wird.

Die DE 10 2010 041 961 A1 beschreibt ein Kraftfahrzeug mit einer Vorrichtung zur Beeinflussung der Blickrichtung des Fahrers, welches übermittelt zu Gefahren Detektion und Mittel zur Ausgabe zumindest einer Warnung vor einer detektierten Gefahr sowie über eine im Wesentlichen mittig in der Armaturentafel des Kraftfahrzeugs angeordnete Anzeigeneinheit zur Anzeige von Information-und/oder Entertainmentinhalten aufweist. Dabei ist eine Lichtanimation ausgebbar, die eine Lichtbewegung in Richtung des Fahrersichtfelds darstellt.

Die DE 10 2015 206 953 A1 offenbart ein Verfahren zur Anpassung einer Betriebsart einer Ambiente-Lichtleiste eines Fortbewegungsmittels. Das Verfahren umfasst die Schritte: Sensorisches Erfassen einer Annäherung einer Hand eines Anwenders an einen vordefinierten Bereich innerhalb des Fortbewegungsmittels und im Ansprechen darauf, Anpassen der Betriebsart der Ambiente-Lichtleiste.

Die DE 10 2011 014 262 A1 beschreibt das Erzielen bestimmter Leuchteffekte durch eine Leuchtvorrichtung in einem Kraftfahrzeug. Die Leuchtvorrichtung weist eine Vielzahl transparenter und nicht transparenter Elemente auf, die abwechselnd aneinander angeordnet sind.

Die DE 10 2013 206 628 A1 betrifft eine Kraftfahrzeuginnenbeleuchtung mit einer Vielzahl von Lichtquellen und einer Vielzahl von Lichtleitern, die derart ausgeführt sind, dass Licht verschiedener Lichtquellen in verschiedenen Lichtleiter eingekoppelt wird. Eine Steuereinrichtung ist derart ausgeführt, dass die verschiedenen Lichtquellen zeitlich versetzt zueinander in einen Leuchtzustand geschaltet werden.

Die DE 10 2008 033 542 A1 beschreibt ein Lauflicht einer Passagierkabine, wobei das Lauflicht mit der Geschwindigkeit der Passagierkabine läuft. Dadurch scheint die Passagierkabine an einer stillstehenden Lichtquelle vorbeizufahren.

Die DE 10 2012 211 052 A1 betrifft eine Kraftfahrzeuginnenraumbeleuchtung mit einer Vielzahl von Lichtquellen. Eine Steuereinrichtung ist derart ausgeführt, dass die verschiedenen Lichtquellen zeitlich versetzt zueinander in einen Leuchtzustand geschaltet werden.

Der zitierte Stand der Technik beschäftigt sich auf unterschiedliche Art und Weise mit einer atmosphärischen Beleuchtung des Kraftfahrzeuginnenraums. Durch atmosphärische Beleuchtung oder Ambiente-Beleuchtung des Innenraums kann dieser blendfrei für den Fahrer ausgeleuchtet werden. Es können Beleuchtungseffekte zur stimmungsvollen Beleuchtung erzielt werden. Außerdem kann die Aufmerksamkeit sowie die Konzentrationsfähigkeit des Fahrers durch passende Beleuchtungseffekte verbessert und hierdurch die Verkehrssicherheit des Kraftfahrzeugs erhöht werden.

Daraus ergibt sich als Aufgabe der vorliegenden Erfindung, eine verbesserte atmosphärische Beleuchtung eines Kraftfahrzeuginnenraums zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht von einem Verfahren zum Ausleuchten eines Innenraums eines Kraftfahrzeugs aus. Dabei wird der Innenraum des Kraftfahrzeugs insbesondere durch eine Vielzahl an Leuchtmitteln ausgeleuchtet. Das Verfahren sieht die folgenden Schritte vor:
(i) Ausleuchten des Innenraums mit einem ersten aus der Vielzahl an Leuchtmitteln mit einem ersten vorgebbaren Helligkeitswert über eine erste vorgebbare Zeitspanne hinweg, anschließend
(ii) fortschreitendes Verringern der Helligkeit des ersten Leuchtmittels,
(iii) sobald die Helligkeit des ersten Leuchtmittels einen vorbegebenen Helligkeitsgrenzwert unterschreitet, fortschreitendes Erhöhen der Helligkeit eines zuvor ausgeschalteten zweiten aus der Vielzahl an Leuchtmitteln bis das Maß der Helligkeit des zweiten Leuchtmittels einem zweiten vorgebbaren Helligkeitswert entspricht,
(iv) Ausleuchten des Innenraums mit dem zweiten Leuchtmittel mit dem zweiten vorgebbaren Helligkeitswert über eine zweite vorgebbare Zeitspanne hinweg, anschließend
(v) fortschreitendes Verringern der Helligkeit des zweiten Leuchtmittels,
(vi) sobald die Helligkeit des zweiten Leuchtmittels den vorbegebenen Helligkeitsgrenzwert unterschreitet, fortschreitendes Erhöhen der Helligkeit eines zuvor ausgeschalteten dritten aus der Vielzahl an Leuchtmitteln bis das Maß der Helligkeit des dritten Leuchtmittels einem dritten vorgebbaren Helligkeitswert entspricht, anschließend
(vii) Ausleuchten des Innenraums mit dem dritten Leuchtmittel mit dem dritten vorgebbaren Helligkeitswert über eine dritte vorgebbare Zeitspanne hinweg, anschließend
(viii) fortschreitendes Verringern der Helligkeit des dritten Leuchtmittels,
(ix) mehrfaches Wiederholen der Schritte (i) bis (viii).

Unter dem fortschreitenden Verringern der Helligkeit der Leuchtmittel ist insbesondere zu verstehen, dass die Helligkeit der Leuchtmittel konstant oder stufenweise in mehreren Stufen herab geregelt wird. Mit anderen Worten wird die Helligkeit der Leuchtmittel sukzessive verringert. Dabei wird das jeweilige Leuchtmittel nicht in einem Schritt ausgeschaltet. Das Verringern der Helligkeit der Leuchtmittel kann beispielsweise durch Dimmen der Leuchtmittel erzielt werden. Somit wird ein weicher Übergang der Helligkeit des Leuchtmittels erzielt.

Unter dem fortschreitenden Erhöhen der Helligkeit der Leuchtmittel ist insbesondere zu verstehen, dass die Helligkeit der Leuchtmittel konstant oder stufenweise in mehreren Stufen hinauf geregelt wird. Mit anderen Worten wird die Helligkeit der Leuchtmittel sukzessive erhöht. Dabei wird das jeweilige Leuchtmittel nicht in einem Schritt eingeschaltet. Das Erhöhen der Helligkeit der Leuchtmittel kann beispielsweise durch Dimmen der Leuchtmittel erzielt werden. Somit wird ein weicher Übergang der Helligkeit des Leuchtmittels erzielt.

Die jeweiligen vorgebbaren Helligkeitswerte und/oder die jeweiligen vorgebbaren Zeitspannen können während der Durchführung des Verfahrens vorgegeben werden. Alternativ oder zusätzlich können die jeweiligen vorgebbaren Helligkeitswerte und/oder die jeweiligen vorgebbaren Zeitspannen fest vorgegeben sein. Fest vorgegeben bedeutet insbesondere, dass diese bereits vor Durchführung des Verfahrens vorbestimmt sind. Beide Möglichkeiten können auch kombiniert werden, indem vorbestimmte Helligkeitswert beziehungsweise Zeitspannen beispielsweise dann genutzt werden, wenn kein Helligkeitswert beziehungsweise keine Zeitspanne während der Durchführung des Verfahrens vorgegeben wird.

Der vorgegebene Helligkeitsgrenzwert ist vorteilhafterweise größer als 0. In diesem Fall erfolgt das fortschreitende Erhöhen der Helligkeit des zweiten Leuchtmittels bereits bevor das erste Leuchtmittel vollständig ausgeschaltet ist. Mit anderen Worten strahlen das erste Leuchtmittel und das zweite Leuchtmittel zumindest zeitweise gleichzeitig Licht ab. Dasselbe gilt für das zweite Leuchtmittel und das dritte Leuchtmittel. Das zweite Leuchtmittel und das dritte Leuchtmittel strahlen zumindest zeitweise gleichzeitig Licht ab.

Im vorliegenden wird das Verfahren anhand dreier Leuchtmittel erläutert. In anderen Ausführungsformen wird das Verfahren zusätzlich mit einer beliebige Anzahl weiterer Leuchtmittel durchgeführt. In diesem Fall erfolgt das wiederholen der Schritte (i) bis (viii) insbesondere erst dann, wenn jedes der weiteren Leuchtmittel analog zu dem ersten, dem zweiten und dem dritten Leuchtmittel angesteuert wurde. Insbesondere ist das erste Leuchtmittel benachbart zu dem zweiten Leuchtmittel angeordnet und das zweite Leuchtmittel benachbart zu dem dritten Leuchtmittel angeordnet. Vorzugsweise werden die drei Leuchtmitteln und optional die weiteren Leuchtmittel derart angesteuert, dass jeweils benachbarte Leuchtmittel nacheinander aufleuchten. Die drei Leuchtmittel und optional die weiteren Leuchtmittel können entlang einer Linie angeordnet sein, wobei sich Licht, welches durch die Leuchtmittel abgestrahlt wird, entlang der Linie bewegt.

Beim wiederholten Durchführen der Schritte (i) bis (viii) kann vorgesehen sein, dass beim erstmaligen Durchführen der Schritte der erste, zweite, dritte Helligkeitswert jeweils um ein vorbestimmtes Maß reduziert werden. Erst bei darauffolgenden Iterationen werden die drei Leuchtmittel mit dem vollständigen ersten, zweiten und dritten Helligkeitswert angesteuert. Dies resultiert in einer leichten Lichtwelle, die der normalen Lichtwelle vorausgeht. Die leichte Lichtwelle kann abflachen, bevor die normale Lichtwelle angezeigt wird. Das ist zuträglich für einen besseren Kontrast.

Resultat des vorliegenden Verfahrens ist eine Lichtwelle, welche sich über die drei Leuchtmittel und optional über die weiteren Leuchtmittel ausbreitet. Das Licht, welches durch die Leuchtmittel abgestrahlt wird, bewegt sich dabei von Leuchtmittel zu Leuchtmittel. Aufgrund des fortschreitenden Verringerns der Helligkeit ergibt sich bei der Bewegung des Lichts ein besonders weicher Übergang. Auf diese Weise ergibt sich eine verbesserte atmosphärische Beleuchtung des Kraftfahrzeugs. Daraus kann sich eine höhere Konzentrationsfähigkeit des Fahrers und somit eine höhere Verkehrssicherheit des Kraftfahrzeugs ergeben.

Die erfindungsgemäße Ausgestaltung sieht vor, dass die erste vorbestimmte Zeitspanne kürzer ist als zweite vorbestimmte Zeitspanne und die zweite vorbestimmte Zeitspanne kürzer ist als die dritte vorbestimmte Zeitspanne oder die erste vorbestimmte Zeitspanne länger ist als die zweite vorbestimmte Zeitspanne und die zweite vorbestimmte Zeitspanne länger ist als die dritte vorbestimmte Zeitspanne. Im ersten genannten Fall erhöht sich die Ausbreitungsgeschwindigkeit der Lichtwelle und im zweiten genannten Fall verringert sich die Ausbreitungsgeschwindigkeit der Lichtwelle. Im Falle weiterer Leuchtmittel kann die oben genannte Gesetzmäßigkeit extrapoliert werden. Insbesondere kann vorgesehen sein, dass entsprechend einer der oben genannten Gesetzmäßigkeiten Zeitspannen zum Beleuchten des Innenraums durch die weiteren Leuchtmittel während der Ausbreitung der Lichtwelle weiter erhöht oder verringert werden.

Im Rahmen der Erfindung wird der Innenraum des Kraftfahrzeugs durch jedes der Leuchtmittel unterschiedlich lang beleuchtet. Dadurch kann sich die Ausbreitungsgeschwindigkeit der Lichtwelle entlang der Leuchtmittel verändern. Hierdurch kann die atmosphärische Beleuchtung des Kraftfahrzeugs verbessert werden.

Eine Weiterbildung sieht vor, dass eine Farbe der Leuchtmittel und/oder der erste, zweite und/oder dritte Helligkeitswert und/oder die Dauer der ersten, zweiten und/oder dritten Zeitspanne abhängig von einer Ist-Größe aus einer Erfassungseinheit des Kraftfahrzeugs gewählt wird. Mit anderen Worten kann die Farbe, mit welcher die Leuchtmittel den Innenraum des Kraftfahrzeugs beleuchten, abhängig von der Ist-Größe gewählt werden. Alternativ oder zusätzlich kann der erste Helligkeitswert und/oder der zweite Helligkeitswert und/oder der dritte Helligkeitswert in Abhängigkeit von der Ist-Größe gewählt werden. Alternativ oder zusätzlich kann die jeweilige Dauer der ersten Zeitspanne und/oder der zweiten Zeitspanne und/oder der dritten Zeitspanne abhängig von der Ist-Größe gewählt werden. Insbesondere können die Farbe, die jeweiligen Helligkeitswert und/oder die jeweiligen Zeitspannen in Abhängigkeit von der Ist-Größe aus einem jeweiligen Wertebereich ausgewählt werden.

Die Ist-Größe kann beispielsweise einen Zustand einer Komponente des Kraftfahrzeugs oder einen Fahrzustand, insbesondere eine Position, Geschwindigkeit oder Beschleunigung, des Kraftfahrzeugs charakterisieren. Die Komponente des Kraftfahrzeugs kann beispielsweise als Entertainment-System, Radio, Navigationssystem, Klimaeinrichtung oder Sonnenschutzeinrichtung ausgeführt sein. In diesem Fall kann der Zustand der Komponente beispielsweise einen dargestellten Inhalt des Entertainment-Systems, eine Lautstärke des Radios, Navigationshinweise des Navigationssystems oder einen Betriebszustand der Klimaeinrichtung oder der Sonnenschutzeinrichtung betreffen. Alternativ ist die Komponente des Kraftfahrzeugs zur Charakterisierung eines Gemütszustand des Fahrers ausgebildet. In diesem Fall kann der Zustand der Komponente und dementsprechend auch die Ist-Größe den Gemütszustand des Fahrers charakterisieren. Der Fahrzustand des Kraftfahrzeugs kann insbesondere die momentan gefahrene Geschwindigkeit oder eine durch den Fahrer abgerufene Beschleunigung des Kraftfahrzeugs betreffen. In Abhängigkeit von der Ist-Größe des Kraftfahrzeugs wird dann beispielsweise die Ausbreitungsgeschwindigkeit der Lichtwelle und/oder die Änderung der Ausbreitungsgeschwindigkeit der Lichtwelle und/oder die Helligkeit der Lichtwelle vorgegeben. Auf diese Weise kann die atmosphärische Beleuchtung des Innenraums des Kraftfahrzeugs automatisch an den Betriebszustand des Kraftfahrzeugs oder den Gemütszustand des Fahrers angepasst werden.

Eine Weiterbildung sieht vor, dass beim Ausleuchten des Innenraums durch das erste Leuchtmittel, das zweite Leuchtmittel und das dritte Leuchtmittel ein farbiges Lichtsignal durch das jeweilige Leuchtmittel ausgegeben wird und eine Lichtfarbe des farbigen Lichtsignals eines jeweiligen Leuchtmittels während der jeweiligen Zeitspanne nach einem vorgebbaren Farbmuster variiert wird. Mit anderen Worten wird in diesem Fall durch die jeweiligen Leuchtmittel kein farbiges Licht konstanter Farbe abgestrahlt. Das Lichtmuster kann mehrere Lichtfarben umfassen, welche nach einem vorgebbaren Farbmuster variiert werden. Das vorgebbare Farbmuster kann entweder in Abhängigkeit von der Ist-Größe vorgegeben werden oder vorbestimmt sein. Insbesondere wird das Farbmuster in Abhängigkeit von der Ist-Größe aus einer Vielzahl abgespeicherter Farbmuster ausgewählt.

Ein zweiter Aspekt der Erfindung betrifft ein Kraftfahrzeug mit
- einem ersten Leuchtmittel, einem zweiten Leuchtmittel und einem dritten Leuchtmittel, welche in einem Innenraums des Kraftfahrzeugs zur Ausleuchtung des Innenraums angeordnet sind, und
- einer Steuereinrichtung zum Ansteuern der Leuchtmittel, wobei
- das Kraftfahrzeug eingerichtet ist, ein Verfahren der oben genannten Art auszuführen. Insbesondere ist die Steuereinrichtung dazu eingerichtet, die Leuchtmittel entsprechend der Verfahrensschritte (i) bis (ix) anzusteuern.

Die erfindungsgemäße Ausgestaltung sieht vor, dass die erste vorbestimmte Zeitspanne kürzer ist als zweite vorbestimmte Zeitspanne und die zweite vorbestimmte Zeitspanne kürzer ist als die dritte vorbestimmte Zeitspanne oder die erste vorbestimmte Zeitspanne länger ist als die zweite vorbestimmte Zeitspanne und die zweite vorbestimmte Zeitspanne länger ist als die dritte vorbestimmte Zeitspanne.

Eine Weiterbildung sieht vor, dass unterschiedliche Segmente einer segmentierten Leuchte das erste Leuchtmittel, das zweite Leuchtmittel und das dritte Leuchtmittel ausbilden. Insbesondere sind die unterschiedlichen Segmente der segmentierten Leuchte durch die Steuereinrichtung getrennt ansteuerbar. Jedes Segment kann eine jeweilige Leuchtdiode (LED) umfassen, welche durch die Steuereinrichtung getrennt an steuerbar ist. Die segmentierte Leuchte kann beispielsweise an dem Armaturenbrett, der Türverkleidung oder dem Dachhimmel des Kraftfahrzeugs angeordnet sein.

Eine Weiterbildung sieht vor, dass das zweite Leuchtmittel zwischen dem ersten Leuchtmittel und dem dritten Leuchtmittel angeordnet ist. Das erste Leuchtmittel kann benachbart zu dem zweiten Leuchtmittel angeordnet sein und das zweite Leuchtmittel kann benachbart zu dem dritten Leuchtmittel angeordnet sein.

Eine Weiterbildung sieht vor, dass das erste Leichtmittel, das zweite Leuchtmittel und das dritte Leuchtmittel entlang einer Linie aneinander angrenzend angeordnet sind. Mit anderen Worten sind die drei Leuchtmittel entlang der Linie angeordnet. Dabei grenzen die Leuchtmittel jeweils aneinander. Insbesondere grenzt das erste Leuchtmittel an das zweite Leuchtmittel an und das zweite Leuchtmittel grenzt an das dritte Leuchtmittel an. Angrenzen bedeutet insbesondere, dass die Leuchtmittel nicht voneinander beabstandet sind.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben. Umgekehrt bilden Merkmale des erfindungsgemäßen Kraftfahrzeugs auch das erfindungsgemäße Verfahren weiter.

Im Folgenden sind Ausführungsbeispiele der Erfindung beschrieben. Hierzu zeigt:
- Fig. 1: eine schematische Draufsicht auf ein Kraftfahrzeug mit einer Beleuchtungseinrichtung;
- Fig. 2: einen beispielhaften zeitlichen Verlauf für die Darstellung von Licht durch eine Beleuchtungseinrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

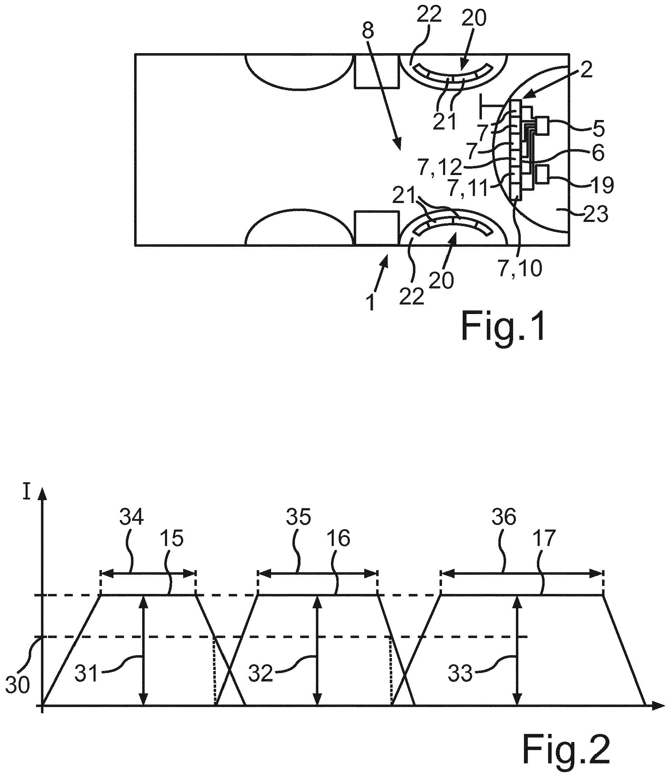

Fig. 1 zeigt eine schematische Draufsicht auf ein Kraftfahrzeug 1 mit einer Beleuchtungseinrichtung 2. Bei dem Kraftfahrzeug 1 handelt es sich insbesondere um einen Kraftwagen, vorzugsweise einen Personenkraftwagen. Die Beleuchtungseinrichtung 2 umfasst eine segmentierte Leuchte 6 mit einer Vielzahl an Segmenten 7. Jedes der Segmente 7 umfasst ein jeweiliges Leuchtmittel, beispielsweise eine Leuchtdiode (LED, OLED) oder eine beliebige andere Lichtquelle, insbesondere eine Vielfarben-LED. Durch die Leuchtdiode ist jedes der Segmente 7 in der Lage unabhängig von den übrigen der Segmenten 7 Licht unterschiedlicher Farben und Helligkeiten wiederzugeben. Die Helligkeit des Lichts ist insbesondere charakterisiert durch den Lichtstrom einer jeweiligen Leuchtdiode beziehungsweise eines jeweiligen Segments. Die Farbe des Lichts jedes der Segmente 7 kann durch einen Farbwert, beispielsweise auf einer RGB-Skala charakterisiert sein.

Eine Steuereinrichtung 5 ist dazu ausgebildet, die Beleuchtungseinrichtung 2 anzusteuern. Insbesondere wird durch die Steuereinrichtung 5 jedes der Segmente 7 einzeln angesteuert. Beispielsweise ist die Steuereinrichtung 5 in der Lage, Helligkeit und/oder Farbe jedes der Segmente 7 einzeln zu steuern. Insbesondere wird jedes der Segmente 7 der Beleuchtungseinrichtung 2 durch die Steuereinrichtung 5 auf gleiche Art und Weise angesteuert. Gleich bedeutet hierbei, dass das Ansteuerungsprinzip gleich ist. Gleich bedeutet hierbei nicht, dass für jedes der Segmente 7 dieselbe Helligkeit, Dimmgeschwindigkeit (auch Dimmrampe genannt)) und/oder Farbe vorgegeben wird. Im Gegenteil wird durch jedes der Segmente 7 vorzugsweise eine unterschiedliche Farbe bei unterschiedlicher Helligkeit wiedergegeben.

Die Beleuchtungseinrichtung 2 ist an einem Armaturenbrett 23 des Kraftfahrzeugs 1 angeordnet. Diese Anordnung ist rein beispielhaft zu verstehen. Beispielsweise umfasst das Kraftfahrzeug 1 weitere Beleuchtungseinrichtungen 20 mit jeweiligen Segmenten 21. Die weiteren Beleuchtungseinrichtungen 20 sind vorliegend beispielsweise an Türverkleidungen 22 des Kraftfahrzeugs 1 angeordnet. Das Funktionsprinzip der weiteren Beleuchtungseinrichtungen 20 kann dem Funktionsprinzip der Beleuchtungseinrichtungen 2 entsprechen. Die Beleuchtungseinrichtung 2 sowie die weiteren Beleuchtungseinrichtungen 20 sind zur Ausleuchtung eines Innenraums 8 des Kraftfahrzeugs 1 ausgebildet. Insbesondere ist die Beleuchtungseinrichtung 2 und/oder sind die weitere Beleuchtungseinrichtungen 20 in dem Innenraum 8 des Kraftfahrzeugs 1 angeordnet.

Im Folgenden wird das Prinzip der Beleuchtungseinrichtung 2 anhand dreier der Segmente 7 genauer erläutert. Ein erstes der Segmente wird im Folgenden als erstes Leuchtmittel 10, ein zweites der Segmente als zweites Leuchtmittel 11 und ein drittes der Segmente als drittes Leuchtmittel 12 bezeichnet. Die Segmente 7 der segmentierten Leuchte 6 sind entlang einer Linie angeordnet. Dabei grenzen die Segmente 7 jeweils aneinander. Insbesondere grenzt das erste Leuchtmittel 10 an das zweite Leuchtmittel 11 und das zweite Leuchtmittel 11 grenzt an das dritte Leuchtmittel 12. Dabei ist das zweite Leuchtmittel 11 zwischen dem ersten Leuchtmittel 10 und dem dritten Leuchtmittel 12 angeordnet.

Fig. 2 zeigt die Helligkeit I der drei Leuchtmittel 10, 11, 12 gemäß einer Ausführungsform des vorliegenden Verfahrens entlang einer Zeitachse t aufgetragen. Zunächst wird die Helligkeit 15 des ersten Leuchtmittels 10 sukzessive von 0 auf einen ersten vorgebbaren Helligkeitswert 31 erhöht. Der Innenraum 8 des Kraftfahrzeugs 1 wird dann über eine erste vorgebbare Zeitspanne 34 hinweg durch das erste Leuchtmittel 10 ausgeleuchtet. Während der ersten vorgebbaren Zeitspanne 34 entspricht die Helligkeit 15 des ersten Leuchtmittels 10 dem ersten vorgebbaren Helligkeitswert 31. Nach Ablauf der ersten vorgebbaren Zeitspanne 34 wird die Helligkeit 15 des ersten Leuchtmittels 10 sukzessive auf 0 verringert beziehungsweise gedimmt.

Wenn die Helligkeit 15 des ersten Leuchtmittels 10 beim Verringern der Helligkeit 15 einen Helligkeitsgrenzwert 30 unterschreitet, wird die Helligkeit 16 des zweiten Leuchtmittels 11 sukzessive von 0 auf einen zweiten vorgebbaren Helligkeitswert 32 erhöht. Dabei strahlen das erste Leuchtmittel 10 und das zweite Leuchtmittel 11 zeitweise gleichzeitig Licht ab. Sobald die Helligkeit 16 des zweiten Leuchtmittels 11 den zweiten Helligkeitswert 32 erreicht hat, wird der Innenraum 8 des Kraftfahrzeugs 1 über eine zweite vorgebbaren Zeitspanne 35 hinweg durch das zweite Leuchtmittel 11 ausgeleuchtet. Während der zweiten vorgebbaren Zeitspanne 35 entspricht die Helligkeit 16 des zweiten Leuchtmittels 11 dem zweiten vorgebbaren Helligkeitswert 32. Nach Ablauf der zweiten vorgebbaren Zeitspanne 35 wird die Helligkeit 16 des zweiten Leuchtmittels 11 sukzessive auf 0 verringert beziehungsweise gedimmt.

Wenn die Helligkeit 16 des zweiten Leuchtmittels 11 beim Verringern der Helligkeit 16 den Helligkeitsgrenzwert 30 unterschreitet, wird die Helligkeit 17 des dritten Leuchtmittels 12 sukzessive von 0 auf einen dritten vorgebbaren Helligkeitswert 33 erhöht. Dabei strahlen das zweite Leuchtmittel 11 und das dritte Leuchtmittel 12 zeitweise gleichzeitig Licht ab. Sobald die Helligkeit 17 des dritten Leuchtmittels 12 den dritten vorgebbaren Helligkeitswert 33 erreicht hat, wird der Innenraum des Kraftfahrzeugs 1 über eine dritte vorgebbaren Zeitspanne 36 hinweg durch das dritte Leuchtmittel 12 ausgeleuchtet. Während der dritten vorgebbaren Zeitspanne 36 entspricht die Helligkeit 17 des dritten Leuchtmittels 12 dem dritten vorgebbaren Helligkeitswert 33. Nach Ablauf der dritten vorgebbaren Zeitspanne 36 wird die Helligkeit 17 des dritten Leuchtmittels 12 sukzessive auf 0 verringert beziehungsweise gedimmt.

Im Anschluss wird das Verfahren auf weitere der Segmente 7 ausgeweitet. Dabei wird das Licht nacheinander von benachbarten der Segmente 7 abgestrahlt. Dadurch ergibt sich eine Lichtwelle, welche sich in dem Kraftfahrzeug 1 gemäß Fig. 1 von einer Beifahrerseite zu einer Fahrerseite hin ausbreitet.

In dem Beispiel gemäß Fig. 2 sind die Zeitspannen 34, 35, 36 unterschiedlich. Insbesondere werden die Zeitspannen 34, 35, 36 zunehmend länger. Hierdurch wird eine Ausbreitungsgeschwindigkeit der Lichtwelle innerhalb deren Verlauf verringert. Alternativ können die Zeitspannen 34, 35, 36 zunehmend länger werden. Hierdurch kann die Ausbreitungsgeschwindigkeit der Lichtwelle innerhalb deren Verlauf erhöht werden.

Die Helligkeitswerte 31, 32, 33 sind vorliegend gleich. In anderen Ausführungsformen kann vorgesehen sein, dass sich die Helligkeitswerte 31, 32, 33 unterscheiden.

Das Kraftfahrzeug 1 weist eine Erfassungseinrichtung 19 auf, welche eine Ist-Größe erfasst. Die Erfassungseinrichtung 19 kann einen Zustand einer Komponente des Kraftfahrzeugs 1, einen Gemütszustand eines Fahrers des Kraftfahrzeugs 1 oder einen Fahrzustand des Kraftfahrzeugs 1 erfassen. Die Ist-Größe charakterisiert den Zustand der Komponente, den Gemütszustand des Fahrers oder den Fahrzustand. Beispielsweise erfasst die Erfassungseinrichtung 19 eine Geschwindigkeit, eine Beschleunigung oder eine Position des Kraftfahrzeugs 1 als den Fahrzustand. Alternativ erfasst die Erfassungseinrichtung 19 eine Lautstärkeeinstellung eines Autoradios des Kraftfahrzeugs, einen Inhalt eines Entertainment-Systems des Kraftfahrzeugs eine Navigationsanweisung aus einem Navigationssystem des Kraftfahrzeugs oder einen Betriebszustand einer Klimatisierungseinrichtung des Kraftfahrzeugs als den Zustand der Komponente.

Die Helligkeitswerte 31, 32, 33 und/oder die Zeitspannen 34, 35, 36 können fest vorgegeben sein. Alternativ können die Helligkeitswerte 31, 32, 33 und/oder die Zeitspannen 34, 35, 36 in Abhängigkeit von der Ist-Größe vorgegeben werden.

Es kann vorgesehen sein, dass die Leuchtmittel 10, 11, 12 Licht derselben Lichtfarbe oder Licht unterschiedlicher Lichtfarbe abstrahlen. Insbesondere kann die Lichtfarbe der Leuchtmittel 10, 11, 12 in Abhängigkeit von der Ist-Größe vorgegeben werden.

Insgesamt zeigen die Beispiele, wie durch die Erfindung eine verbesserte indirekte Beleuchtung eines Kraftfahrzeuginnenraums zu ermöglicht wird.

## Patentansprüche

1. Verfahren zum Ausleuchten eines Innenraums (8) eines Kraftfahrzeugs (1) mit einer Vielzahl an Leuchtmitteln (10, 11, 12), mit den Schritten:
(i) Ausleuchten des Innenraums (8) mit einem ersten (10) aus der Vielzahl an Leuchtmitteln (10, 11, 12) mit einem ersten vorgebbaren Helligkeitswert (31) über eine erste vorgebbare Zeitspanne (34) hinweg, anschließend
(ii) fortschreitendes Verringern der Helligkeit (15) des ersten Leuchtmittels (10),
(iii) sobald die Helligkeit (15) des ersten Leuchtmittels (10) einen vorbegebenen Helligkeitsgrenzwert (30) unterschreitet, fortschreitendes Erhöhen einer Helligkeit (16) eines zuvor ausgeschalteten zweiten (11) aus der Vielzahl an Leuchtmitteln (10, 11, 12), bis das Maß der Helligkeit (16) des zweiten Leuchtmittels (11) einem zweiten vorgebbaren Helligkeitswert (30) entspricht,
(iv) Ausleuchten des Innenraums (8) mit dem zweiten Leuchtmittel (11) mit dem zweiten vorgebbaren Helligkeitswert (32) über eine zweite vorgebbare Zeitspanne (35) hinweg, anschließend
(v) fortschreitendes Verringern der Helligkeit (16) des zweiten Leuchtmittels (11),
(vi) sobald die Helligkeit (16) des zweiten Leuchtmittels (11) den vorbegebenen Helligkeitsgrenzwert (30) unterschreitet, fortschreitendes Erhöhen der Helligkeit (17) eines zuvor ausgeschalteten dritten (12) aus der Vielzahl an Leuchtmitteln (10, 11, 12), bis das Maß der Helligkeit (17) des dritten Leuchtmittels (12) einem dritten vorgebbaren Helligkeitswert (33) entspricht, anschließend
(vii) Ausleuchten des Innenraums (8) mit dem dritten Leuchtmittel (12) mit dem dritten vorgebbaren Helligkeitswert (33) über eine dritte vorgebbare Zeitspanne (36) hinweg, anschließend
(viii) fortschreitendes Verringern der Helligkeit (17) des dritten Leuchtmittels (12),
(ix) mehrfaches Wiederholen der Schritte (i) bis (viii),
**dadurch gekennzeichnet, dass**
die erste vorgebbare Zeitspanne (34) kürzer ist als die zweite vorgebbare Zeitspanne (35) und die zweite vorgebbare Zeitspanne (35) kürzer ist als die dritte vorgebbare Zeitspanne (36) oder die erste vorgebbare Zeitspanne (34) länger ist als die zweite vorgebbare Zeitspanne (35) und die zweite vorgebbare Zeitspanne (35) länger ist als die dritte vorgebbare Zeitspanne (36).

2. Verfahren nach Anspruch 1,
**dadurch gekennzeichnet, dass**
eine Farbe der Leuchtmittel (10, 11, 12) und/oder der erste, zweite und/oder dritte Helligkeitswert (31, 32, 33) und/oder die Dauer der ersten, zweiten und/oder dritten Zeitspanne (34, 35, 36) abhängig von einer Ist-Größe aus einer Erfassungseinheit (19) des Kraftfahrzeugs (1) gewählt wird.

3. Verfahren nach Anspruch 2,
**dadurch gekennzeichnet, dass**
die Ist-Größe einen Zustand einer Komponente des Kraftfahrzeugs (1) oder einen Fahrzustand, insbesondere eine Position, Geschwindigkeit oder Beschleunigung, des Kraftfahrzeugs (1) charakterisiert.

4. Verfahren nach einem der vorhergehenden Ansprüche,
**dadurch gekennzeichnet, dass**
beim Ausleuchten des Innenraums (8) durch das erste Leuchtmittel (10), das zweite Leuchtmittel (11) und das dritte Leuchtmittel (12) ein farbiges Lichtsignal durch das jeweilige Leuchtmittel (10, 11, 12) ausgegeben wird und eine Lichtfarbe des farbigen Lichtsignals eines jeweiligen Leuchtmittels (10, 11, 12) während der jeweiligen Zeitspanne nach einem vorgebbaren Farbmuster variiert wird.

5. Kraftfahrzeug (1), mit
- einem ersten Leuchtmittel (10), einem zweiten Leuchtmittel (11) und einem dritten Leuchtmittel (12), welche in einem Innenraum (8) des Kraftfahrzeugs (1) zur Ausleuchtung des Innenraums (8) angeordnet sind, und
- einer Steuereinrichtung (5) zum Ansteuern der Leuchtmittel (10, 11, 12), wobei
- das Kraftfahrzeug (1) eingerichtet ist, ein Verfahren nach einem der vorhergehenden Ansprüche auszuführen, und
- die Steuereinrichtung dazu eingerichtet ist, die Leuchtmittel entsprechend der Verfahrensschritte des Anspruchs 1 anzusteuern.

6. Kraftfahrzeug (1) nach Anspruch 5,
**dadurch gekennzeichnet, dass**
unterschiedliche Segmente (7) einer segmentierten Leuchte (6) das erste Leuchtmittel (10), das zweite Leuchtmittel (11) und das dritte Leuchtmittel (12) ausbilden.

7. Kraftfahrzeug (1) nach Anspruch 5 oder 6,
**dadurch gekennzeichnet, dass**
das zweite Leuchtmittel (11) zwischen dem ersten Leuchtmittel (10) und dem dritten Leuchtmittel (12) angeordnet ist.

8. Kraftfahrzeug (1) nach einem der Ansprüche 5 bis 7,
**dadurch gekennzeichnet, dass**
das erste Leuchtmittel (10), das zweite Leuchtmittel (11) und das dritte Leuchtmittel (12) in Linie aneinander angrenzend angeordnet sind.

## Claims

1. Method for illuminating an interior (8) of a motor vehicle (1) with a multiplicity of lighting means (10, 11, 12), having the steps:
(i) illuminating the interior (8) with a first (10) of the multiplicity of lighting means (10, 11, 12) with a first predeterminable brightness value (31) over a first predeterminable period of time (34), subsequently
(ii) progressive reduction in the brightness (15) of the first lighting means (10),
(iii) as soon as the brightness (15) of the first lighting means (10) undershoots a predetermined brightness threshold value (30), progressive increasing of a brightness (16) of a previously switched-off second (11) of the plurality of lighting means (10, 11, 12), until the level of the brightness (16) of the second lighting means (11) corresponds to a second predeterminable brightness value (30),
(iv) illuminating the interior (8) with the second lighting means (11) with the second predeterminable brightness value (32) over a second predeterminable period of time (35), subsequently
(v) progressive reduction in the brightness (16) of the second lighting means (11),
(vi) as soon as the brightness (16) of the second lighting means (11) undershoots the predetermined brightness threshold value (30), progressive increasing of the brightness (17) of a previously switched-off third (12) of the plurality of lighting means (10, 11, 12) until the level of the brightness (17) of the third lighting means (12) corresponds to a third predeterminable brightness value (33), subsequently
(vii) illuminating the interior (8) with the third lighting means (12) with the third predeterminable brightness value (33) over a third predeterminable period of time (36), subsequently
(viii) progressive reduction in the brightness (17) of the third lighting means (12),
(ix) multiple repetition of steps (i) to (viii),
**characterised in that**
the first predeterminable period of time (34) is shorter than the second predeterminable period of time (35) and the second predeterminable period of time (35) is shorter than the third predeterminable period of time (36) or the first predeterminable period of time (34) is longer than the second predeterminable period of time (35) and the second predeterminable period of time (35) is longer than the third predeterminable period of time (36).

2. Method according to claim 1,
**characterised in that**
a colour of the lighting means (10, 11, 12) and/or the first, second and/or third brightness value (31, 32, 33) and/or the duration of the first, second and/or third period of time (34, 35, 36) is selected depending on an actual value from a detecting unit (19) of the motor vehicle (1).

3. Method according to claim 2,
**characterised in that**
the actual value characterises a state of a component of the motor vehicle (1) or a vehicle status, in particular a position, speed or acceleration, of the motor vehicle (1).

4. Method according to any of the preceding claims,
**characterised in that**
when illuminating the interior (8) by means of the first lighting means (10), the second lighting means (11) and the third lighting means (12) a coloured light signal is outputted by the respective lighting means (10, 11, 12) and a light colour of the coloured light signal of a respective lighting means (10, 11, 12) is varied during the respective time periods according to a predeterminable colour pattern.

5. Motor vehicle (1), having
- a first lighting means (10), a second lighting means (11) and a third lighting means (12) which are disposed in an interior (8) of the motor vehicle (1) for illuminating the interior (8), and
- a control device (5) for controlling the lighting means (10, 11, 12), wherein
- the motor vehicle (1) is configured to carry out the method according to any of the preceding claims, and
- the control device is configured to control the lighting means according to the method steps of claim 1.

6. Motor vehicle (1) according to claim 5,
**characterised in that**
different segments (7) of a segmented lamp (6) form the first lighting means (10), the second lighting means (11) and the third lighting means (12).

7. Motor vehicle (1) according to claim 5 or 6,
**characterised in that**
the second lighting means (11) is disposed between the first lighting means (10) and the third lighting means (12).

8. Motor vehicle (1) according to any of claims 5 to 7,
**characterised in that**
the first lighting means (10), the second lighting means (11) and the third lighting means (12) are disposed in a line adjoining one another.

## Revendications

1. Procédé d'éclairage d'un espace intérieur (8) d'un véhicule automobile (1) avec une pluralité de moyens d'éclairage (10, 11, 12), avec les étapes :
(i) éclairage de l'espace intérieur (8) avec un premier (10) de la pluralité de moyens d'éclairage (10, 11, 12) avec une première valeur de luminosité (31) pouvant être prédéfinie pendant une première période (34) pouvant être prédéfinie, ensuite
(ii) diminution progressive de la luminosité (15) du premier moyen d'éclairage (10),
(iii) dès que la luminosité (15) du premier moyen d'éclairage (10) passe sous une valeur limite de luminosité (30) prédéfinie, augmentation progressive d'une luminosité (16) d'un deuxième moyen (11) auparavant éteint de la pluralité de moyens d'éclairage (10, 11, 12), jusqu'à ce que la mesure de la luminosité (16) du deuxième moyen d'éclairage (11) corresponde à une deuxième valeur de luminosité (30) pouvant être prédéfinie,
(iv) éclairage de l'espace intérieur (8) avec le deuxième moyen d'éclairage (11) avec la deuxième valeur de luminosité (32) pouvant être prédéfinie pendant une deuxième période (35) pouvant être prédéfinie, ensuite
(v) diminution progressive de la luminosité (16) du deuxième moyen d'éclairage (11),
(vi) dès que la luminosité (16) du deuxième moyen d'éclairage (11) passe sous la valeur limite de luminosité (30) prédéfinie, augmentation progressive de la luminosité (17) d'un troisième moyen (12) auparavant éteint de la pluralité de moyens d'éclairage (10, 11, 12), jusqu'à ce que la mesure de la luminosité (17) du troisième moyen d'éclairage (12) corresponde à une troisième valeur de luminosité (33) pouvant être prédéfinie, ensuite
(vii) éclairage de l'espace intérieur (8) avec le troisième moyen d'éclairage (12) avec la troisième valeur de luminosité (33) pouvant être prédéfinie pendant une troisième période (36) pouvant être prédéfinie, ensuite
(viii) diminution progressive de la luminosité (17) du troisième moyen d'éclairage (12),
(ix) plusieurs répétitions des étapes (i) à (viii),
**caractérisé en ce que**
la première période (34) pouvant être prédéfinie est plus courte que la deuxième période (35) pouvant être prédéfinie et la deuxième période (35) pouvant être prédéfinie est plus courte que la troisième période (36) pouvant être prédéfinie ou la première période (34) pouvant être prédéfinie est plus longue que la deuxième période (35) pouvant être prédéfinie et la deuxième période (35) pouvant être prédéfinie est plus longue que la troisième période (36) pouvant être prédéfinie.

2. Procédé selon la revendication 1,
**caractérisé en ce que**
une couleur des moyens d'éclairage (10, 11, 12) et/ou la première, deuxième et/ou troisième valeur de luminosité (31, 32, 33) et/ou la durée de la première, deuxième et/ou troisième période (34, 35, 36) est sélectionnée en fonction d'une grandeur réelle à partir d'une unité de détection (19) du véhicule automobile (1).

3. Procédé selon la revendication 2,
**caractérisé en ce que**
la grandeur réelle caractérise un état d'un composant du véhicule automobile (1) ou un état de conduite, en particulier une position, vitesse ou accélération, du véhicule automobile (1).

4. Procédé selon l'une quelconque des revendications précédentes,
**caractérisé en ce que**
lors de l'éclairage de l'espace intérieur (8) par le premier moyen d'éclairage (10), le deuxième moyen d'éclairage (11) et le troisième moyen d'éclairage (12), un signal lumineux coloré est émis par le moyen d'éclairage (10, 11, 12) respectif et une couleur de lumière du signal lumineux coloré d'un moyen d'éclairage (10, 11, 12) respectif est modifiée pendant la période respective selon un modèle de couleur pouvant être prédéfini.

5. Véhicule automobile (1), avec
- un premier moyen d'éclairage (10), un deuxième moyen d'éclairage (11) et un troisième moyen d'éclairage (12), lesquels sont agencés dans un espace intérieur (8) du véhicule automobile (1) pour l'éclairage de l'espace intérieur (8), et
- un dispositif de commande (5) pour la commande des moyens d'éclairage (10, 11, 12), dans lequel
- le véhicule automobile (1) est aménagé pour réaliser un procédé selon l'une quelconque des revendications précédentes, et
- le dispositif de commande est aménagé pour commander les moyens d'éclairage conformément aux étapes de procédé de la revendication 1.

6. Véhicule automobile (1) selon la revendication 5,
**caractérisé en ce que**
différents segments (7) d'une lampe segmentée (6) forment le premier moyen d'éclairage (10), le deuxième moyen d'éclairage (11) et le troisième moyen d'éclairage (12).

7. Véhicule automobile (1) selon la revendication 5 ou 6,
**caractérisé en ce que**
le deuxième moyen d'éclairage (11) est agencé entre le premier moyen d'éclairage (10) et le troisième moyen d'éclairage (12).

8. Véhicule automobile (1) selon l'une quelconque des revendications 5 à 7, **caractérisé en ce que**
le premier moyen d'éclairage (10), le deuxième moyen d'éclairage (11) et le troisième moyen d'éclairage (12) sont agencés en ligne de manière adjacente l'un à l'autre.
